# EUROPEAN PATENT SPECIFICATION

(11) **EP 0 490 939 B1**
(45) Date of publication and mention of the grant of the patent: **14.09.1994**
(21) Application number: 90913182.3
(22) Date of filing: 10.08.1990
(51) Int. Cl.: F16D 23/06

(54) **SYNCHRONISER MECHANISM FOR AUTOMATIVE MANUAL TRANSMISSION**
SYNCHROVORRICHTUNG FÜR AUTOMATISCHE MANUELLE ÜBERTRAGUNG
MECANISME SYNCHRONISATEUR DE TRANSMISSION AUTOMOBILE MANUELLE

(30) Priority: 09.09.1989 DE 3930173
(43) Date of publication of application: 24.06.1992
(73) Proprietor: FORD-WERKE AKTIENGESELLSCHAFT, 50725 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: BERNHARDT, Bodo, D-5024 Pulheim 4 (DE)
(74) Representative: Messulam, Alec Moses
(86) International application number: GB9001260
(87) International publication number: WO9103658

(56) References cited:
- EP-A- 0 272 134
- US-A- 4 013 153
- US-A- 4 712 662

## Description

### Field of the invention

The present invention relates to a synchroniser mechanism for mutually driveably connecting a shaft and a gearwheel journalled on the shaft, comprising a control sleeve driveably connected to a hub on the shaft by spline teeth, the control sleeve being slidably mounted on the hub for displacement along the axis of the shaft and having a first inclined surface located near an axial extremity of the spline teeth; a first conical surface on the gearwheel and first radial coupling teeth adjacent the conical surface and located axially further from the hub than the first conical surface; and a blocking ring located adjacent the hub and having a second conical surface facing the complementary first conical surface on the gearwheel.

### Description of the prior art

German patent application DE-3225201 describes a synchroniser mechanism as described above having locking springs with axially extending portions for transmitting actuating forces to blocking synchroniser rings.

Known synchroniser mechanisms have the disadvantage that the blocking synchroniser ring, which is pressed by the synchroniser locking member, rotates in its groove or stop arrangement. Because inclined surfaces on the sliding sleeve contact inclined surfaces on the blocking synchroniser ring, the synchronising ring prevents axial movement of the control sleeve due to increased frictional engagement on a conical surface formed on a loosely running gear wheel until synchronous speed is achieved. After spline teeth on the control sleeve engage dull teeth on the blocking synchroniser ring, that ring must break away from the conical surface so that the teeth on the control sleeve engage coupling teeth on the gear wheel.

In synchroniser mechanisms currently in use, the breaking away of the blocking ring from the conical surface on the gear wheel requires that substantial force be applied to the coupling teeth so that gear shifting is accompanied by undesirable peaks of shifting force applied to the synchroniser sleeve.

### Object of the invention

The present invention seeks to provide a synchroniser mechanism for a manual transmission in which the connection between the control sleeve of the synchroniser and the loosely running gear wheel may be produced without breaking away of a blocking ring from a conical surface on the gear, thereby avoiding speed jumps.

### Summary of the invention

According to the present invention, a synchroniser mechanism as set out above is characterised by a locking member mounted for radial movement relative to the shaft axis, the locking member having second coupling teeth adapted for meshing engagement with said first coupling teeth as the locking member moves toward the shaft axis and for disengagement therefrom as the locking member moves away from the shaft axis, and having a second inclined surface substantially parallel to, and adapted for contact with the first inclined surface as the control sleeve moves axially.

In the preferred embodiment of the invention, radially moveable coupling parts including locking members, distributed angularly around the circumference of the mechanism, are guided in U-shaped recesses in the blocking synchroniser ring, and are held in their starting position by a common annular spring element or by individual spring elements. When large torsional loads are transmitted by the mechanism, the coupling locking members are held in their starting position in closed openings in the blocking synchroniser ring by individual, axially-inserted spring elements. These spring elements concurrently form a centrifugal force stop for the coupling locking members by means of recesses in the coupling locking member having a triangular longitudinal cross section.

It should be mentioned that the gearwheel and the control sleeve may be transposed in that the radially movable locking element may be arranged to rotate with the gearwheel and may be radially urged out by a surface of the gearwheel to engage inwardly facing teeth on the control sleeve.

### Brief description of the drawings

The invention is described in more detail, by way of example, with reference to embodiments illustrated in the drawings, in which:
Figure 1 is a cross section through a synchroniser mechanism according to the invention, the components being located in a neutral position.
Figure 2 is a cross section similar to that of Figure 1, wherein the components of the mechanism are located as they are in the beginning of synchronisation.
Figure 3 is a cross section similar to that of Figure 1 showing the components located as they are at completion of the shifting process.
Figure 4 is an enlarged cross section through a blocking synchroniser ring according to the invention with a sectional coupling locking member.
Figure 5 is a cross section taken along plane V-V of Figure 4 showing the coupling locking member located in the starting position.
Figure 6 is an enlarged cross section through an embodiment of the blocking synchroniser ring in which a sectional coupling locking member has an individual rod-shaped spring element.
Figure 7 is a cross section taken at plane VII-VII of Figure 6 with the coupling locking member located in the starting position.
Figure 8 is an enlarged cross section of an embodiment of the blocking synchroniser ring according to the invention wherein a sectional coupling locking member has an individual rod-shaped spring element as part of a closing ring.
Figure 9 is a partial cross section taken at plane IX-IX of Figure 8, wherein the coupling locking member is located in the starting position and radially directed coupling teeth are illustrated.
Figure 10 is a partial cross section taken at plane IX-IX in Figure 8 showing the coupling locking member located in the coupling position.
Figure 11 is a plan view of the blocking synchroniser ring showing integral resilient coupling components.
Figure 12 is a cross section of the blocking synchroniser ring taken at plane XII-XII of Figure 11.
Figure 13 is a partial cross section taken at plane XIII-XIII of Figure 12.
Figure 14 is a vertical cross section of a synchroniser mechanism according to this invention having internal synchroniser mechanism components.

### DESCRIPTION OF THE PREFERRED EMBODIMENT

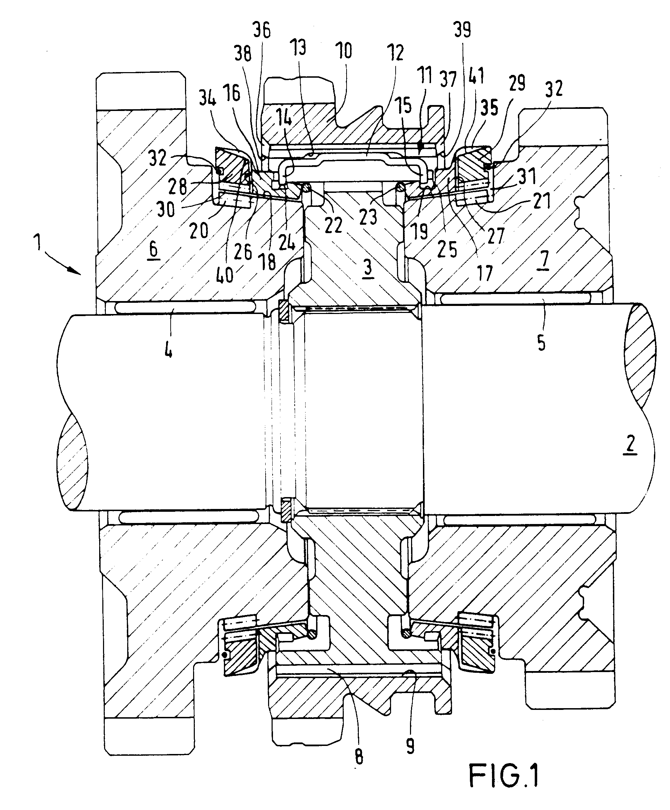

Figures 1-3 show a synchroniser mechanism 1 located on a transmission main shaft 2. The mechanism includes a synchroniser coupling hub 3 rotatably fixed to the shaft 2, and two adjacent gearwheels 6 and 7 journalled on the outer surface of the shaft by needle bearings 4 and 5, the gearwheels being arranged suitably for meshing engagement with fixed gears or a pinion carried on a driving shaft, driven shaft or countershaft (not shown).

A control sleeve 10, is supported for sliding movement on the coupling hub 3 by engagement of external teeth 8 formed on the outer periphery of the hub and internal teeth 9 formed on the inner surface of the sleeve 10. Located in three peripheral recesses spaced angularly about the shift axis in the synchroniser coupling hub 3, there are located girder-shaped synchroniser locking members 11, which are pressed from sheet metal. Mound 12, located at the axial centre of the locking member, cooperates with the corresponding recesses 13 in the control sleeve to transmit axial movement of the sleeve by way of the end flanges 14, 15 of member 11 to blocking synchroniser rings 16, 17.

The blocking synchroniser rings have internal conical surfaces facing external conical surfaces 18, 19 formed on the gearwheels. Radial coupling teeth 20, 21 are formed on the gearwheels after the synchroniser conical faces 18 and 19 are formed.

Locking members 11 are held in engagement with the control sleeve by means of annular synchroniser locking springs 22, 23.

The radially inwardly bent flanges 14, 15 of the synchroniser locking members 11 engage corresponding grooves 24, 25 formed on the blocking synchroniser rings 16, 17 to give the synchroniser rings a defined position between hub 3 and conical faces 18, 19 and to facilitate retraction of the rings 16, 17 during disengagement.

This action prevents undesirable smoothening of the contacting frictional surfaces, which include conical faces 18 and 19 on the gearwheels and conical faces of the synchroniser rings 16 and 17, due to reciprocal striking action caused by vibrations in the transmission.

On the axial ends of rings 16, 17 facing the gearwheels, are formed U-shaped recesses 26, 27, within which radially movable coupling locking members 28, 29 are located and held. At the radially inner ends of these locking members are formed radial teeth 30, 31 corresponding to the radial coupling teeth 20, 21 on the gearwheels.

The coupling locking members 28, 29 located in the recesses 26, 27 are located in three angularly spaced positions about the shaft axis or at any number of such positions selected freely according to the magnitude of torque to be transmitted. These positions are distributed angularly around the periphery and are secured outwardly by respective annular springs 32 located in recesses 13 in rings 16, 17 against displacement due to centrifugal force. Locking members 28, 29 are pushed back into their starting position by the springs upon completion of the gear shift.

Rings 16, 17 are provided with blocking teeth having inclined surfaces. The teeth cooperate with the front edges of internal teeth 8 on the control sleeve 10, which have corresponding inclined surfaces 36, 37.

Actuating slopes 38, 39 formed at the axial extremities of the internal teeth on control sleeve 10, cooperate with corresponding inclined surfaces 40, 41 located on the radially outer ends of locking members 28, 29.

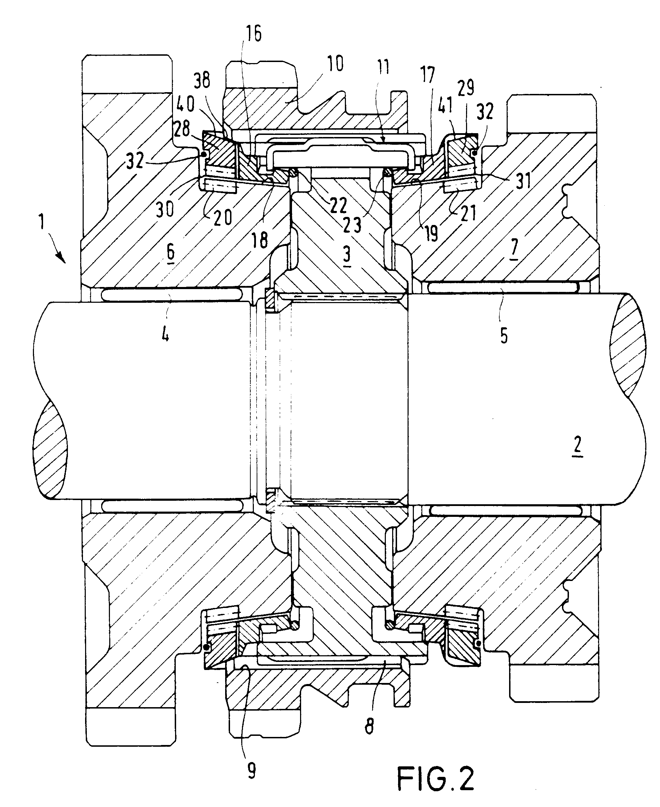

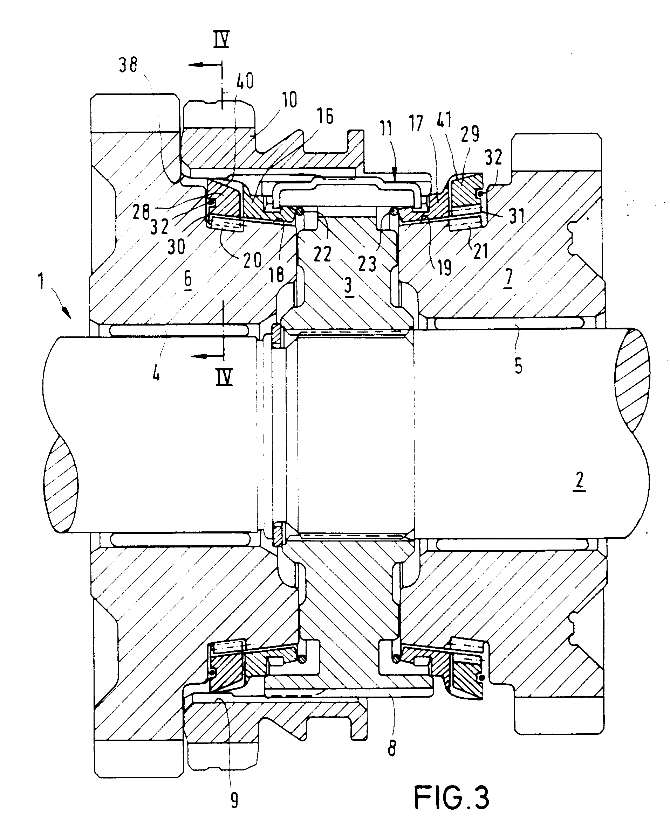

In Figures 2 and 3, the parts of the synchroniser mechanism corresponding to those of Figure 1 are provided with the same reference numbers and are shown in successive positions during the gear shift. The mode of operation of the synchroniser mechanism of this invention is described next.

Application of a preshift force causes control sleeve 10 to move from its neutral position. Clearances among the several components are removed and the locking members 11, blocking ring 16 and conical face 18 are loaded. The axial end of the recesses 13 on control sleeve 10 presses mound 12 on locking member 11 inwardly, and blocking ring 16 turns into its blocking starting position. Displacement of control sleeve 10 continues and the synchronisation process begins by loading the inclined surfaces on locking teeth 34 of ring 16 and inclined surface 36 on the internal teeth of the sleeve. Ring 16 is forced against conical face 18 on gear wheel 6.

After the gear wheel and sleeve reach synchronous speed, axial displacement of the sleeve continues, thereby causing actuating slope 38 to strike the slope 40 on the radially movable coupling locking member 28. The locking members slide radially inwards into engagement with the teeth 20 while the slope 40 contacts the internal teeth 8 of the sleeve, as shown in Figure 3.

Engagement of the locking member 28 with the coupling teeth is accomplished with the aid of inclined surfaces 42 on the radially inner end of the locking member teeth and inclined surfaces on the radially outer ends of the coupling teeth. Due to a radial clearance existing between locking member 28 and the recesses 26 in which the locking members are received in the synchroniser ring and the close pitch of the coupling teeth, the blocking synchroniser ring 16 does not have to break away.

Locking members 28 are engaged completely with the coupling teeth 20 on the gear wheel by further sliding the control sleeve until its strikes the gearwheel. A rigid connection between gearwheel 6 and the transmission main shaft 2 is produced with the components in the position shown in Figure 3. Torque is transmitted from gear wheel 6 via the radial coupling teeth 20, coupling locking members 28, blocking synchroniser rings 16, the blocking teeth of ring 16, control sleeve 10, hub 3, and shaft 2.

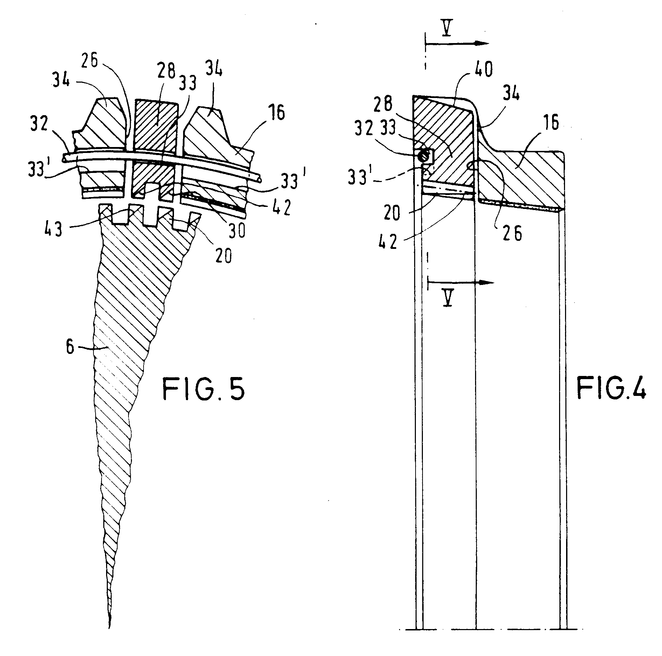

Figures 4 and 5 show an embodiment of the invention illustrating the arrangement of a radial coupling locking member 28 and clearance between member 28 and recess 26 in ring 16. Clearance between member 28 and ring 16 and resilient support of the coupling member 28 provided by annular spring 32 are also illustrated. Spring 32 is guided in the coupling member 28 by recesses 33. The recesses in member 28 are designed such that, on release, member 28 springs back into its starting position. Some of the recesses 33 of the synchroniser ring are larger than necessary and serve as an end stop.

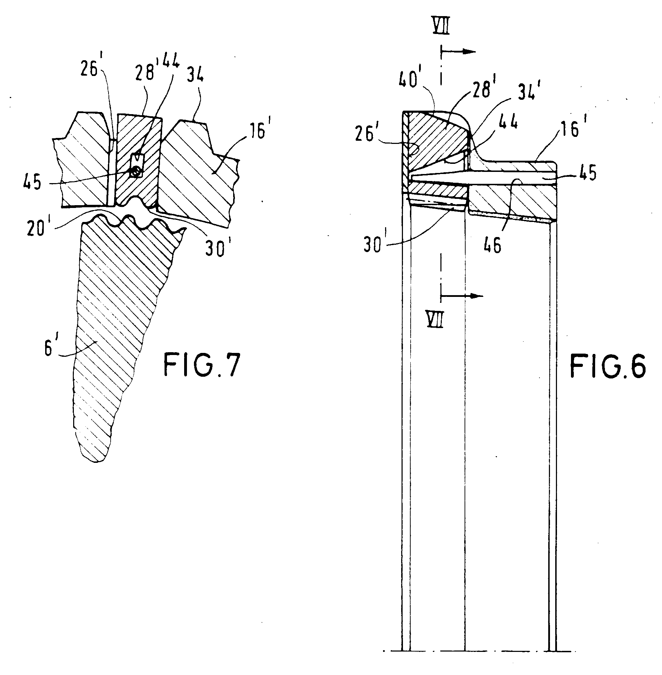

Figures 6 and 7 illustrate another embodiment in which a radially movable coupling locking member is located within a closed opening 26' in a blocking synchroniser ring 16'. Coupling teeth 30' at the radially inner surface of the locking member are adapted to engage coupling teeth 20' located at the radially outer adjacent surface of the gearwheel.

Locking member 28' is provided with a recess 44, which is triangular in longitudinal cross section and into which a cantilevered rod-shaped spring element 45 penetrates. This spring element is fixed in an opening 46 formed in blocking ring 16'. The cantilevered rod-shaped spring element, a wire spring or a leaf spring, cooperates with the horizontal and inclined faces of recess 44 such that the horizontal face outwardly limits displacement of the coupling member by centrifugal force and the inclined face develops a restoring force during radial displacement of the locking member 28' inwardly.

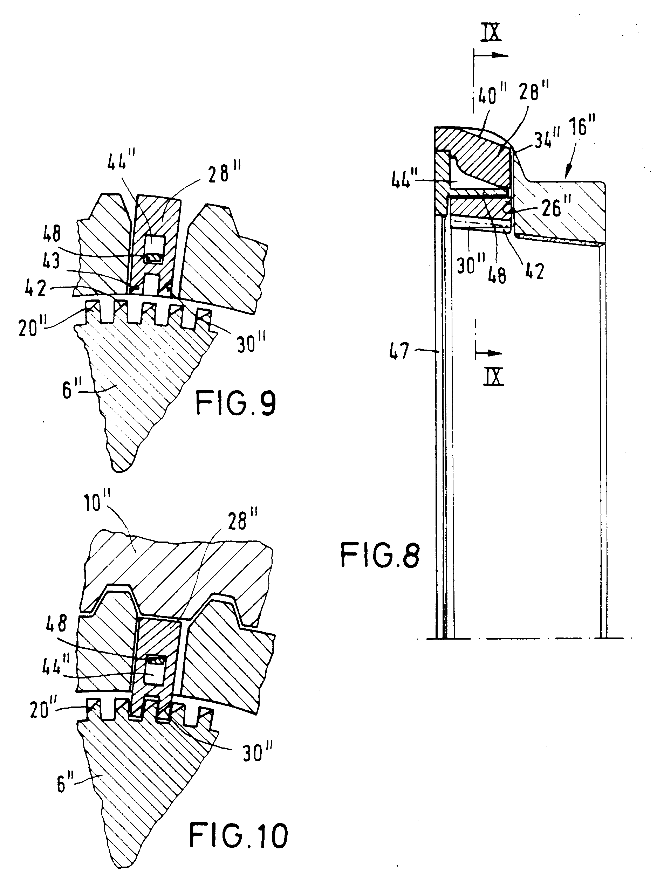

Figure 8 shows a further embodiment of a blocking synchroniser ring 16'' in which a U-shaped recess 26'' is closed by a closure ring 47 pressed into locking member 28'. Corresponding rod-shaped spring elements 48, which penetrate into recesses 44'' in the coupling locking member 28, are fixed or formed on closure ring 47. On the coupling teeth 30'', a coupling locking member 28'' has partial slopes 42 located at the radially outer ends.

Figure 9 shows the coupling locking member 28'' in its starting position. Figure 10 shows locking member 28'' engaged.

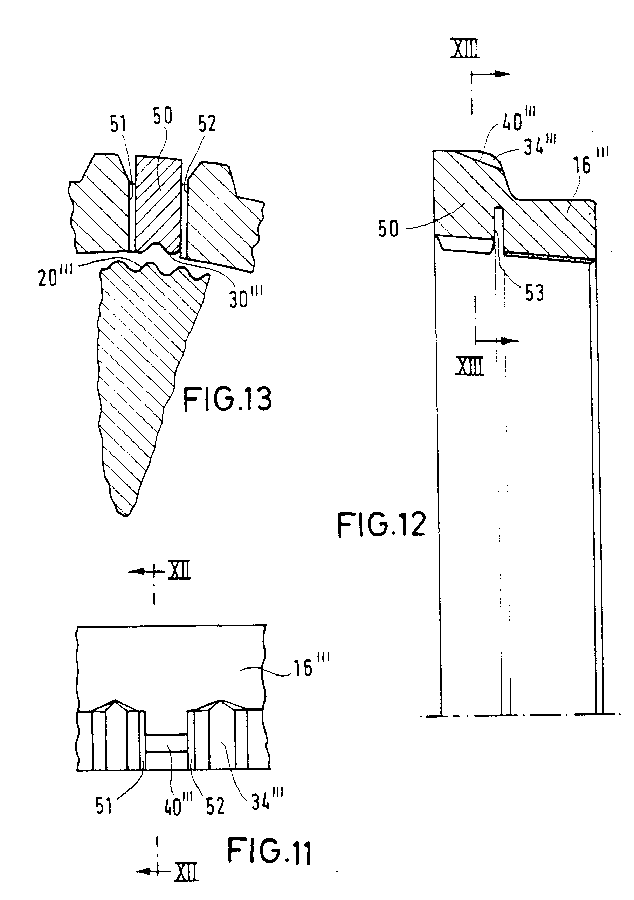

Figure 11 shows a radial plan view of another embodiment of blocking synchroniser rings 16'', in which radially movable, resilient coupling parts 50 are formed integrally with a blocking synchroniser ring 16''' such that some of the coupling parts are separated from the synchroniser ring by slots 50, 52 and 53, as illustrated in Figure 12.

No special spring elements are required in the embodiments of Figures 11-13, but the coupling parts must allow necessary compensating movement in the peripheral direction and radial engagement movement.

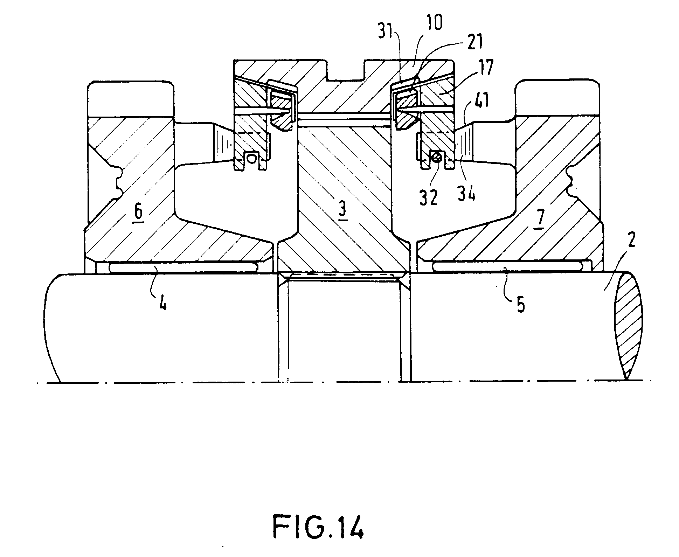

Figure 14 shows another embodiment of the synchroniser mechanism according to this invention. Application of the preshifting force causes control sleeve 10 to move out of its neutral position. The synchronisation clearances are removed and the blocking synchroniser ring 17, restoring spring 32 and synchroniser conical face are loaded. Sleeve 10, with its sloping face, displaces ring 17 against the resistance of the spring, and the blocking synchroniser ring turns into its blocking starting position before synchronisation.

Displacement of sleeve 10 continues so that synchronisation begins with the loading of inclined surfaces 34 on the three internal blocking teeth. Ring 17 is pressed onto the synchroniser conical face on the sliding sleeve and decelerates rotation of the loosely running gearwheel 7.

Once gearwheel 7 and control sleeve 10 have come to synchronous speed, displacement of the sleeve with the blocking synchroniser ring 17 and coupling locking device 29 continues. Coupling locking members 29 therefore strike the actuating inclined surface 41 on the gear wheel 7, slide and engage, as pushing continues radially outward in the direction of the coupling teeth 21.

## Claims

1. A synchroniser mechanism (1) for mutually driveably connecting a shaft (2) and a gearwheel (6) journalled on the shaft (2), comprising:
a control sleeve (10) driveably connected to a hub (3) on the shaft (2) by spline teeth (8,9), the control sleeve (10) being slidably mounted on the hub (3) for displacement along the axis of the shaft (2) and having a first inclined surface (36) located near an axial extremity of the spline teeth (9);
a first conical surface (18) on the gearwheel (6) and first radial coupling teeth (20) adjacent the conical surface (18) and located axially further from the hub (3) than the first conical surface (18); and
a blocking ring (16) located adjacent the hub (3) and having a second conical surface facing the complementary first conical surface (18) on the gearwheel (6);
characterised by a locking member (28) mounted for radial movement relative to the shaft axis (2), the locking member (28) having second coupling teeth (30) adapted for meshing engagement with said first coupling teeth (20) as the locking member (28) moves toward the shaft axis and for disengagement therefrom as the locking member (28) moves away from the shaft axis, and having a second inclined surface (40) substantially parallel to, and adapted for contact with the first inclined surface (36) as the control sleeve (10) moves axially.

2. A mechanism as claimed in claim 1, wherein the blocking ring (16) has a recess (26) providing radial access to the coupling teeth (20) of the gearwheel (6) and the locking member (28) is located in the recess (26) of the blocking ring (16) for radial movement therein, and further comprising spring means (32) for resiliently holding the locking member (28) in the recess (26) of the blocking ring (16).

3. A mechanism as claimed in claim 1, wherein the blocking ring (16) has a closed recess (26') adjacent the gearwheel (6') providing radial access to the coupling teeth (20') of the gearwheel (6'), the locking member (28') is located in the recess (26') of the blocking ring (16') for radial movement therein, the locking member (28') has an opening (44) therein extending along its axial length, and the blocking ring (16') has a cylindrical hole (46) extending along a portion of the axial length of said ring (16'), further comprising a spring element (45) having a first portion of its length supported in the hole (46) of the blocking ring (16'), a second portion of its length located in the opening (44) of the locking member (28'), whereby the locking member (28') moves toward the first coupling teeth (20') without restraint over a first portion of its radial movement and with resilient restraint developed by displacement of the spring element (45) over a second portion of its radial movement.

4. A mechanism as claimed in claim 1, wherein the blocking ring (16'') has a recess (26'') adjacent the gearwheel (6'') providing radial access to the coupling teeth (20'') of the gearwheel (6''), the locking member (28'') is located in the recess of the blocking ring (16'') for radial movement therein, the locking member (28'') has an opening (44'') therein extending along its axial length and a closure (47) for the recess (26'') located at an axial end of the locking member (28''), further comprising a spring element (48) having a first part supported rigidly within the closure (47) recess and a second part resiliently extending from the closure (47) and located in the opening (44) of the locking member (28''), whereby the locking member moves toward the first coupling teeth without restraint over a first portion of its radial movement and with resilient restraint developed by displacement of the spring element over a second portion of its radial movement.

5. A mechanism as claimed in any preceding claim, wherein the second coupling teeth (30) of the locking member (28) extend radially toward the first coupling teeth (20) on the gearwheel (6) and extend substantially axially, the radial ends of the first coupling teeth (20) and second coupling teeth (30) having complementary chamfered surfaces (42, 43) extending along the length of the teeth, said surfaces being urged into mutual contact as the control sleeve (10) moves axially against the locking member (28).

6. A mechanism as claimed in any preceding claim, wherein the blocking ring (16) has an annular groove (24), and further comprising a locking spring (11) located radially between the hub (3) and the control sleeve (10), including a first web (12) directed axially and contacting the control sleeve (10), and a flange (14) directed radially from the web (12) toward the blocking ring (16) said flange (14) being located within the groove (24) of the blocking ring (16).

7. A synchroniser mechanism as claimed in any preceding claim, for mutually driveably connecting a shaft and either one two gearwheels (6, 7) journalled on the shaft, wherein the control sleeve has inclined surfaces at both axial ends, the two gearwheels (6,7), are located one on each side of the hub (3), each associated with a respective blocking ring with radially moveable locking members engaged by the inclined surface on a respective end of the control sleeve.

8. A synchroniser mechanism for mutually driveably connecting a shaft (2) and a gearwheel (7) journalled on the shaft (2), comprising:
a control sleeve (10) driveably connected to a hub (3) on the shaft (2) by spline teeth (8,9), the control sleeve (10) being slidably mounted on the hub (3) for displacement along the axis of the shaft (2) and having a first conical surface located near an axial extremity of the spline teeth and first radial coupling teeth (31) adjacent the conical surface;
a first inclined surface (41) on the gearwheel (7);
a blocking ring (17) located adjacent the hub (3), having a second conical surface facing the complementary first conical surface on the control sleeve (10); and
a locking member mounted for radial movement relative to the shaft axis, having second coupling teeth (21) adapted for meshing engagement with said first coupling teeth (31) as the locking member moves away from the shaft axis and for disengagement therefrom as the locking member moves towards the shaft axis, and having a second inclined surface substantially parallel to, and adapted for contact with the first inclined surface (41) on the gearwheel (7) as the control sleeve (10) moves axially.

## Patentansprüche

1. Synchronisationsvorrichtung (1) zur gegenseitigen antriebsmäßigen Verbindung einer Welle (2) mit einem drehbar auf der Welle (2) gelagerten Zahnrad (6), folgendes umfassend:
eine über eine Keilverzahnung (8, 9) antriebsmäßig mit einer Nabe (3) auf der Welle (2) verbundene Schaltmuffe (10), wobei diese Schaltmuffe (10) verschiebbar auf der Nabe (3) angeordnet ist, so daß sie entlang der Achse der Welle (2) verschoben werden kann, und wobei sie eine nahe des einen axialen Endes der Keilverzahnung (9) angeordnete erste Schräge (36) aufweist;
eine erste, an dem Zahnrad (6) ausgebildete Kegelfläche (18) und eine erste radiale Kupplungsverzahnung (20), welche unmittelbar benachbart zur Kegelfläche (18) angeordnet ist und von der Nabe (3) weiter entfernt liegt als die erste Kegelfläche (18); und
einen Blockierring (16), welcher unmittelbar benachbart zur Nabe (3) angeordnet ist und eine zweite Kegelfläche aufweist, welche der komplementären ersten Kegelfläche (18) am Zahnrad (6) gegenüberliegt;
gekennzeichnet durch ein relativ zur Wellenachse (2) radial beweglich montiertes Verriegelungsglied (28), wobei das Verriegelungsglied (28) eine zweite Kupplungsverzahnung (30) aufweist, welche derart ausgebildet ist, daß sie bei der Bewegung des Verriegelungsgliedes (28) zur Wellenachse hin mit besagter erster Kupplungsverzahnung (20) in Eingriff treten kann und bei der Bewegung des Verriegelungsgliedes (28) von der Wellenachse weg außer Eingriff mit der Verzahnung gelangt, und das Glied eine zweite Schräge (40) aufweist, die im wesentlichen parallel zur ersten Schräge (36) verläuft und so ausgebildet ist, daß sie mit dieser in Eingriff gelangt, wenn die Schaltmuffe (10) axial verschoben wird.

2. Vorrichtung nach Anspruch 1, worin der Blockierring (16) eine Aussparung (26) aufweist, welche einen radialen Zugang zu der Kupplungsverzahnung (20) des Zahnrades (6) öffnet, und worin das Verriegelungsglied (28) radial beweglich in der Aussparung (26) des Blockierringes (16) gelagert ist, und worin des weiteren Federmittel (32) vorhanden sind, welche das Verriegelungsglied (28) federnd in der Aussparung (26) des Blockierringes (16) halten.

3. Vorrichtung nach Anspruch 1, worin der Blockierring (16) in unmittelbarer Nachbarschaft zum Zahnrad (6') geschlossene Aussparungen (26') aufweist, die einen radialen Zugang zur Kupplungsverzahnung (20') des Zahnrades (6') gewähren, wobei das Verriegelungsglied (28') radial beweglich in den Aussparungen (26') des Blockierringes (16') gelagert ist, das Verriegelungsglied (28') eine sich über seine axiale Länge erstreckende Öffnung (44) aufweist, und der Blockierring (16') eine sich über einen Teil der axialen Länge des besagten Ringes (16') erstreckende Zylinderbohrung (46) aufweist, außerdem ein Federglied (45) aufweisend, welches mit einem ersten Teil seiner Länge in der Bohrung (46) des Blockierringes (16') und mit einem zweiten Teil seiner Länge in der Öffnung (44) des Verriegelungsgliedes (28') gelagert ist, wodurch das Verriegelungsglied (28') über einen ersten Teil seines radialen Hubes frei in Richtung auf die erste Kupplungsverzahnung (20') bewegt werden kann, und wodurch sich eine elastische Rückstellkraft aufbaut, wenn das Federglied (45) über einen zweiten Teil seines radialen Hubes bewegt wird.

4. Vorrichtung nach Anspruch 1, worin der Blockierring (16'') in unmittelbarer Nachbarschaft zum Zahnrad (6'') Aussparungen (26'') aufweist, die radialen Zugang zur Kupplungsverzahnung (20'') des Zahnrades (6'') gewähren, wobei das Verriegelungsglied (28'') radial beweglich in den Aussparungen des Blockierringes (16'') gelagert ist, das Verriegelungsglied (28'') eine sich über seine axiale Länge erstreckende Öffnung (44'') aufweist, sowie einen an dem einen axialen Ende des Verriegelungsgliedes (28'') angeordneten Verschluß (47) für die Aussparung (26''), außerdem ein Federglied (48) aufweisend, welches mit einem ersten Teil seiner Länge fest mit dem Verschluß (47) verbunden ist und sich mit einem zweiten Teil federnd von dem Verschluß (47) weg erstreckt und in der Öffnung (44) des Verriegelungsgliedes (28'') gelagert ist, wodurch das Verriegelungsglied (28'') über einen ersten Teil seines radialen Hubes frei auf die erste Kupplungsverzahnung zubewegt werden kann, und wodurch sich eine elastische Rückstellkraft aufbaut, wenn das Federglied über einen zweiten Teil seines radialen Hubes bewegt wird.

5. Vorrichtung nach einem beliebigen der vorangehenden Ansprüche, worin die zweite Kupplungsverzahnung (30) des Verriegelungsgliedes (28) sich radial in Richtung auf die erste Kupplungsverzahnung (20) an dem Zahnrad (6) erstreckt, und sich im wesentlichen axial erstreckt, wobei die jeweiligen radialen Enden der ersten Kupplungszähne (20) und der zweiten Kupplungszähne (30) komplementär angefaste Flächen (42, 43) aufweisen, die sich über die Länge der Zähne erstrecken, wobei besagte Flächen in Anlage aneinander gedrückt werden, wenn die Schaltmuffe (10) axial gegen das Verriegelungsglied (28) bewegt wird.

6. Vorrichtung nach einem beliebigen der vorangehenden Ansprüche, worin der Blockierring (16) eine Ringnut (24) aufweist, außerdem eine radial zwischen der Nabe (3) und der Schaltmuffe (10) angeordnete Sperrfeder (11) aufweisend, die einen axial ausgerichteten und an der Schaltmuffe (10) anliegenden ersten Steg (12) umfaßt und einen sich radial von dem Steg (12) aus in Richtung auf den Blockierring (16) erstreckenden Flansch (14), wobei besagter Flansch (14) in der Nut (24) des Blockierringes (16) angeordnet ist.

7. Synchronisationsvorrichtung nach einem beliebigen der vorangehenden Ansprüche zur gegenseitig antriebsmäßigen Verbindung einer Welle mit einem von zwei drehbar auf der Welle gelagerten Zahnrädern (6, 7), worin die Schaltmuffe an beiden axialen Enden mit Schrägen versehen ist, die beiden Zahnräder (6, 7) beiderseits der Nabe (3) angeordnet sind, wobei jedem der beiden ein entsprechender Blockierring mit radial beweglichen Verriegelungsgliedern zugeordnet ist, die mit der Schräge an dem jeweiligen Ende der Schaltmuffe in Eingriff treten.

8. Synchronisationsvorrichtung zur gegenseitigen antriebsmäßigen Verbindung einer Welle (2) mit einem drehbar auf der Welle (2) gelagerten Zahnrad (7), folgendes umfassend:
eine über eine Keilverzahnung (8, 9) antriebsmäßig mit einer Nabe (3) auf der Welle (2) verbundene Schaltmuffe (10), wobei diese Schaltmuffe (10) verschiebbar auf der Nabe (3) angeordnet ist, so daß sie entlang der Achse der Welle (2) verschoben werden kann, und wobei sie eine nahe des einen axialen Endes der Keilverzahnung angeordnete erste Kegelfläche und eine erste, an die Kegelfläche angrenzende radiale Kupplungsverzahnung (31) aufweist;
eine erste Schräge (41) an dem Zahnrad (7);
einen in unmittelbarer Nähe der Nabe (3) angeordneten Blockierring (17) mit einer der komplementären ersten Kegelfläche der Schaltmuffe gegenüberliegenden zweiten Kegelfläche; und
ein relativ zur Wellenachse radial beweglich gelagertes Verriegelungsglied mit einer zweiten Kupplungsverzahnung (21), welche so ausgebildet ist, daß sie mit besagter erster Kupplungsverzahnung (31) in Eingriff tritt, wenn das Verriegelungsglied von der Wellenachse hinweg bewegt wird, und außer Eingriff mit der Verzahnung kommt, wenn das Verriegelungsglied in Richtung auf die Wellenachse bewegt wird, und mit einer zweiten Schräge, die zur ersten Schräge (41) des Zahnrades (7) im wesentlichen parallel ist und an dieser zur Anlage kommt, wenn die Schaltmuffe (10) axial bewegt wird.

## Revendications

1. Mécanisme de synchronisation (1) destiné à relier de manière à ce qu'ils s'entraînent mutuellement un arbre (2) et une roue d'engrenage (6) tourillonnée sur l'arbre (2), comprenant un manchon de commande (10) relié de manière à être entraîné à un moyeu (3) sur l'arbre (2) par des dents cannelées (8, 9), le manchon de commande (10) étant monté de manière coulissante sur le moyeu (3) afin de pouvoir se déplacer le long de l'axe de l'arbre (2) et présentant une première surface inclinée (36) placée près d'une extrémité axiale des dents cannelées (9), une première surface conique (18) sur la roue d'engrenage (6) et des premières dents d'accouplement (20) à côté de la surface conique (18) et placée axialement plus loin du moyeu (3) que la première surface conique (18), et un anneau de blocage (16) placé à côté du moyeu et présentant une seconde surface conique faisant face à la première surface conique complémentaire (18) sur la roue d'engrenage (6), caractérisé par un élément de verrouillage (28) monté pour pouvoir se déplacer radialement par rapport à l'axe de l'arbre (2), l'élément de verrouillage (28) présentant des secondes dents d'accouplement (30) destinées à s'engrener avec lesdites premières dents (20) lorsque l'élément de verrouillage (28) se déplace vers l'axe de l'arbre et à se désengager de celles-ci lorsque l'élément de verrouillage (28) s'éloigne de l'axe de l'arbre, et présentant une seconde surface inclinée (40) essentiellement parallèle à la première surface inclinée (36) et destinée à entrer en contact avec celle-ci lorsque le manchon de commande (10) se déplace axialement.

2. Mécanisme selon la revendication 1, dans lequel l'anneau de blocage (16) présente un évidement (26) fournissant un accès radial aux dents d'accouplement (20) de la roue d'engrenage (6) et l'élément de verrouillage (28) est placé dans l'évidement (26) de l'anneau de blocage (16) pour se déplacer radialement à l'intérieur de celui-ci, et comprenant également des moyens de ressort (32) destinés à maintenir de manière résiliente l'élément de verrouillage (28) dans l'évidement (26) de l'anneau de blocage (16).

3. Mécanisme selon la revendication 1, dans lequel l'anneau de blocage (16) présente un évidement fermé (26') à côté de la roue d'engrenage (6') fournissant un accès radial aux dents d'accouplement (20') de la roue d'engrenage (6'), l'élément de verrouillage (28') est placé dans l'évidement (26') de l'anneau de blocage (16') pour se déplacer radialement à l'intérieur de celui-ci, l'élément de verrouillage (28') présente une ouverture (44) s'étendant le long de sa longueur axiale, et l'anneau de blocage (16') présente un trou cylindrique (46) s'étendant le long d'une portion de la longueur axiale dudit anneau (16'), comprenant également un élément de ressort (45) ayant une première portion de sa longueur supportée dans le trou (46) de l'anneau de blocage (16'), une seconde portion de sa longueur placée dans l'ouverture (44) de l'élément de verrouillage (28'), l'élément de verrouillage (28') se déplaçant de ce fait vers les premières dents d'accouplement (20') sans contrainte sur une première portion de son déplacement radial et avec une contrainte résiliente développée par le déplacement de l'élément de ressort (45) sur une seconde portion de son déplacement radial.

4. Mécanisme selon la revendication 1, dans lequel l'anneau de blocage (16'') présente un évidement (26'') à côté de la roue d'engrenage (6'') fournissant un accès radial aux dents d'accouplement (20'') de la roue d'engrenage (6''), l'élément de verrouillage (28'') est placé dans l'évidement de l'anneau de blocage (16'') pour pouvoir se déplacer radialement à l'intérieur de celui-ci, l'élément de verrouillage (28'') présente une ouverture (44'') s'étendant le long de sa longueur axiale et une fermeture (47) pour l'évidement (26'') placée à une extrémité axiale de l'élément de verrouillage (28''), comprenant également un élément de ressort (48) présentant une première partie supportée de manière rigide par la fermeture (47) et une seconde partie s'étendant de manière résiliente depuis la fermeture (47) et placée dans l'ouverture (44) de l'élément de verrouillage (28''), l'élément de verrouillage dse déplaçant de ce fait vers les premières dents d'accouplement sans contrainte sur une première portion de son déplacement radial et avec une contrainte résiliente développée par le déplacement de l'élément de ressort sur une seconde portion de son déplacement radial.

5. Mécanisme selon l'une des revendications précédentes, dans lequel les secondes dents d'accouplement (30) de l'élément de verrouillage (28) s'étendant radialement vers les premières dents d'accouplement (20) sur la roue d'engrenage (6) et s'étendent essentiellement axialement, les extrémités axiales des premières dents d'accouplement (20) et des secondes dents d'accouplement (30) présentant des surfaces biseautées complémentaires (42, 43) s'étendant le long de la longueur des dents, lesdites surfaces étant poussées en un contact mutuel lorsque le manchon de commande (10) se déplace axialement contre l'élément de verrouillage (28).

6. Mécanisme selon l'une des revendications précédentes, dans lequel l'anneau de blocage (16) présente une rainure annulaire (24), et comprenant également un ressort de verrouillage (11) placé radialement entre le moyeu (3) et le manchon de commande (10), incluant un premier pont (12) dirigé axialement et en contact avec le manchon de commande (10), et une bride de fixation (14) dirigée radialement depuis le pont (12) vers l'anneau de blocage (16), ladite bride de fixation (14) étant placée à l'intérieur de la rainure (24) de l'anneau de blocage (16).

7. Mécanisme de synchronisation selon l'une des revendications précédentes, destiné à relier afin qu'ils s'entraînent mutuellement un arbre et l'une de deux roues d'engrenage (6, 7) tourillonnées sur l'arbre, dans lequel le manchon de commande présente des surfaces inclinées en ses deux extrémités axiales, les deux roues d'engrenage (6, 7) sont placées chacune d'un côté du moyeu (3), chacune étant associée à un anneau de blocage respectif, des éléments de verrouillage pouvant se déplacer radialement étant engagés par la surface inclinée sur une extrémité respective du manchon de commande.

8. Mécanisme de synchronisation destiné à relier afin qu'ils s'entraînent mutuellement un arbre (2) et une roue d'engrenage (7) tourillonnée sur l'arbre (2), comprenant un manchon de comande (10) relié de manière à être entraîner à un moyeu (3) sur l'arbre (2) par des dents cannelées (8, 9), le manchon de commande (10) étant monté de manière coulissante sur le moyeu (3) pour se déplacer le long de l'axe de l'arbre (2) et présentant une première surface conique placée à côté d'une extrémité axiale des dents cannelées et des premières dents d'accouplement radiales (31) à côté de la surface conique, une première surface inclinée (41) sur la roue d'engrenage (7), un anneau de blocage (17) placé à côté du moyeu (3), présentant une seconde surface conique faisant face à la première surface conique complémentaire sur le manchon de commande (10) et un élément de verrouillage monté pour se déplacer radialement par rapport à l'axe de l'arbre, présentant des secondes dents d'accouplement (21) destinées à s'engrener avec lesdites premières dents d'accouplement (31) lorsque l'élément de verrouillage s'éloigne de l'axe de l'arbre et à se désengager de celles-ci lorsque l'élément de verrouillage se déplace vers l'axe de l'arbre, et présentant une seconde surface inclinée essentiellement parallèle à la première surface inclinée (41) sur la roue d'engrenage (7) et destinée à entrer en contact avec celle-ci lorsque le manchon de commande (10) se déplace axialement.
